# EUROPÄISCHE PATENTSCHRIFT

(11) **EP 1 256 002 B1**
(45) Veröffentlichungstag und Bekanntmachung des Hinweises auf die Patenterteilung: **20.04.2005**
(21) Anmeldenummer: 00991786.5
(22) Anmeldetag: 30.12.2000
(51) Int. Cl.: G01P 15/08, G01P 3/49

(54) **VORRICHTUNG ZUR ERZEUGUNG DREHZAHLABHÄNGIGER SIGNALE**
DEVICE FOR GENERATING SIGNALS THAT ARE DEPENDENT ON ROTATIONAL SPEED
DISPOSITIF POUR PRODUIRE DES SIGNAUX DEPENDANT DE LA VITESSE DE ROTATION

(30) Priorität: 18.02.2000 DE 10008765
(43) Veröffentlichungstag der Anmeldung: 13.11.2002
(73) Patentinhaber: Hübner Elektromaschinen AG, 10967 Berlin (DE)
(72) Erfinder: WILHELMY, Lothar, 14195 Berlin (DE); SAWITZKI, Uwe, 12307 Berlin (DE)
(74) Vertreter: Grünecker, Kinkeldey, Stockmair & Schwanhäusser
(86) Internationale Anmeldenummer: PCT/DE2000/004678
(87) Internationale Veröffentlichungsnummer: WO 2001/061363

(56) Entgegenhaltungen:
- DE-A- 2 602 619
- FR-A- 1 419 380
- GB-A- 872 309
- BASEL C V: "ELEKTRISCHE DREHBESCHLEUNIGUNGSMESSER" ATM. ARCHIV FUER TECHNISCHES MESSEN UND INDUSTRIELLE MESSTECHNIK,OLDENBOURG VERLAG, MUENCHEN,DE, Mai 1964 (1964-05), Seiten 113-116, XP000972697 ISSN: 0365-7418

## Beschreibung

### Technisches Gebiet

Die Erfindung betrifft eine Vorrichtung mit von Spulen gebildeten Sensoren zur Erzeugung drehzahlabhängiger Signale unter Ausnutzung des Wirbelstromeffekts mit einem mit der Welle eines hinsichtlich seines Drehzahlverhaltens zu überwachenden Aggregats verbindbaren topfförmigen Rotor, dessen sich in axialer Richtung erstreckender umlaufender Steg im Luftspalt eines Magnetfelds rotiert und bei der der Luftspalt von einem ringförmigen äußeren Stator und einem inneren Stator begrenzt wird, wobei einer der beiden Statoren an mindestens zwei sich diametral gegenüberliegenden Stellen mit dem Luftspalt zugewandten Magneten versehen ist, und wobei den Magneten eine der Zahl der Magnete entsprechende Zahl von paarweise angeordneten Spulen zugeordnet ist.

### Stand der Technik

Aus der FR 12 32 969 ist eine Vorrichtung der vorstehenden Art bekannt, bei der nicht nur die Magnete, sondern auch die die Sensoren bildenden Spulen am äußeren Sensor angeordnet sind und zwar dergestalt, daß zwischen jeweils zwei in Umfangsrichtung des äußeren Stators aufeinanderfolgenden Magneten mit unterschiedlicher Polung jeweils eine auf einen zum inneren Stator gerichteten Zapfen gewickelte Sensorspule angeordnet ist. Die bekannte Vorrichtung bietet gegenüber anderen z.B. aus der DE-OS 15 23 221 und der DE 41 23 128 A1 bekannten Vorrichtungen aufgrund der achssymmetrischen Anordnung ihrer Magnete und Sensorspulen den Vorteil, daß bei ihr sowohl axiale als auch radiale Verlagerungen des Rotors infolge leichter Taumelbewegungen der ihn tragenden Welle ohne Einfluß auf das Meßergebnis bleiben. Die bekannte Vorrichtung vermag allerdings insofern nicht voll zu befriedigen als bei ihr die gemeinsame Anbringung der Magnete und der Sensorspulen am äußeren Stator einerseits der Größe der Sensorspulen Grenzen setzt und andererseits deren optimale Plazierung unmöglich macht.

Bekannt ist außerdem, und zwar aus dem ARCHIV FUER TECHNISCHES MESSEN UND INDUSTRIELLE MESSTECHNIK, 1964, S. 113 - 116 ein Drehbeschleunigungsmesser, bei dem der äußere Stator im Wesentlichen aus zwei Magneten und zwei Querjochen besteht, die die Pole der Magnete miteinander verbinden und über einen Thermoflux-Nebenschluss in Verbindung stehende Polschuhe bilden. Bei diesem Gerät ist der innere Stator mit Nuten für eine einzelne Sensorspule ausgestattet. Bei dieser Konstruktion sind die Magnete als Seitenteile eines kastenförmigen äußeren Stators ausgebildet.

### Darstellung der Erfindung

Der Erfindung liegt die Aufgabe zugrunde, die Empfindlichkeit einer Vorrichtung der in Betracht gezogenen Gattung durch eine modifizierte Anordnung der Sensorspulen gegenüber den Magneten zu steigern. Diese Aufgabe wird erfindungsgemäß dadurch gelöst, dass den Magneten am anderen der beiden Statoren Nuten für jeweils zwei Sensorspulen gegenüberliegen und dass die Magnete und die Sensorspulen so dimensioniert und angeordnet sind, dass die Sensorspulen die magnetischen Felder der Wirbelströme jeweils vollständig erfassen. Durch die an sich bekannte Verlagerung der Sensorspulen auf den vorzugsweise inneren Stator wird Platz für die Wicklungen der Sensorspulen gewonnen, denn diese können sich praktisch über den gesamten Umfang des Stators erstrecken. Bezogen auf ein Magnetfeld bestimmter Größe lässt sich somit ein Maximum an Empfindlichkeit der Vorrichtung erzielen, wobei durch die Anordnung und Ausbildung der zur Aufnahme der Sensorspulen dienenden Nuten gegenüber den Magneten die unter den Magneten verlaufenden, die Hälfte des gesamten Wirbelstromfeldes ausmachenden Wirbelströme weit besser als bei den zuvor erwähnten bzw. beschriebenen Konstruktionen erfasst werden. Die Magnete können folglich vergleichsweise klein sein, was wiederum insofern günstig ist, als mit zunehmender Magnetfeldstärke die Verlustleistung ebenso zunimmt wie mit zunehmender Drehzahl. Anders ausgedrückt, bedeutet dies, dass durch die beanspruchte Ausbildung und Anordnung der Sensorspulen und die hieraus resultierende Empfindlichkeitssteigerung mit einer vergleichsweise niedrigen Magnetfeldstärke größere Drehzahlbereiche als bisher erfasst werden können, ohne dass es zu thermischen Problemen kommt. Hinzu kommt, dass die die Sensoren bildenden Spulen sich kostengünstig mit den gleichen Maschinen wickeln lassen wie die Anker herkömmlicher Tachodynamos.

### Kurze Beschreibung der Zeichnungen

Weitere Merkmale und Einzelheiten der Erfindung ergeben sich aus den Unteransprüchen und der nachstehenden Beschreibung zweier in der beigefügten Zeichnung dargestellter Ausführungsformen der Erfindung. Es zeigen:
- Fig. 1: einen Längsschnitt durch eine erste Vorrichtung zum Messen von Drehbeschleunigungen;
- Fig. 2: einen Querschnitt durch die Vorrichtung nach Fig. 1;
- Fig. 3: eine Einzelheit der Fig. 2 in vergrößertem Maßstab;
- Fig. 4: einen der Fig. 2 entsprechenden Querschnitt durch eine besonders vorteilhafte Ausführungsform und
- Fig. 5: eine Teilabwicklung des inneren Stators der Vorrichtung gemäß Fig. 4.

### Wege zur Ausführung der Erfindung

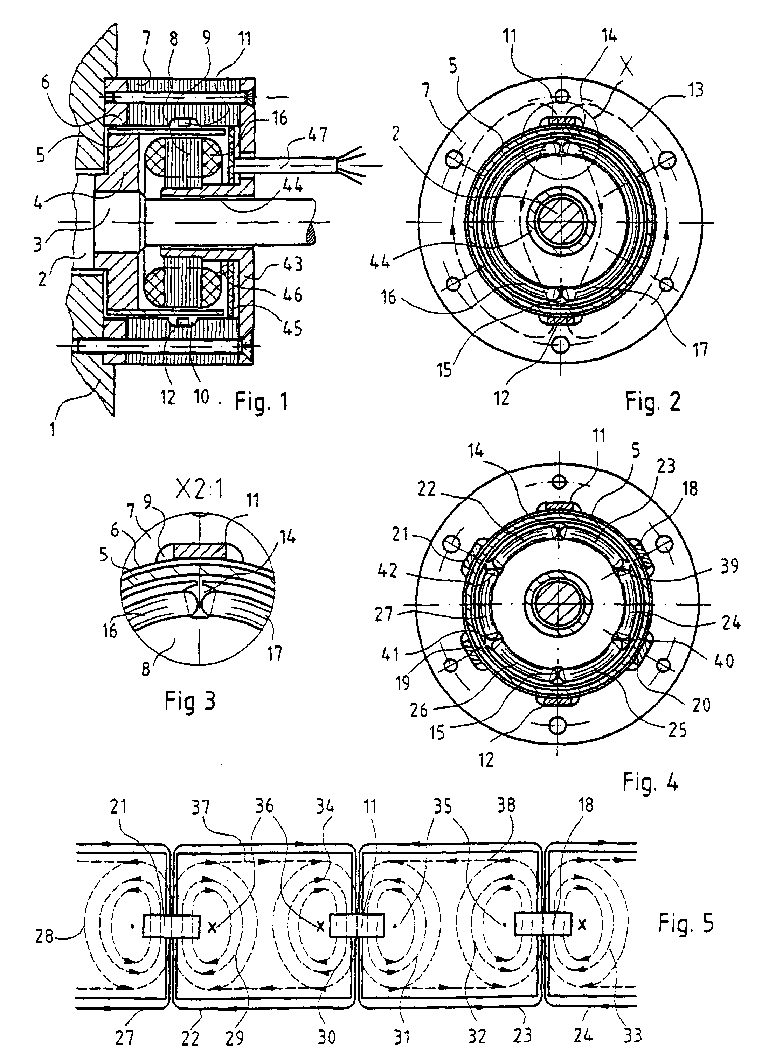

In Fig. 1 ist 1 das Gehäuse eines Aggregats mit einer Welle 2, deren Drehbeschleunigungen erfaßt werden sollen, um sie zu Regelungszwecken zu nutzen. Auf einem Bund 3 der Welle 2 ist eine Nabe 4 gelagert, die an ihrem Umfang einen zylinderförmigen Steg 5 trägt, der zusammen mit der Nabe 4 einen topfförmigen Rotor bildet. Der anders als die Nabe 4 aus nichtmagnetischem, elektrisch leitendem Material bestehende Steg 5 ragt durch einen Luftspalt 6, der von einem äußeren Stator 7 und einem inneren Stator 8 begrenzt ist. Der aus Weicheisenmaterial bestehende äußere Stator 7 weist an seiner Innenwand zwei sich diametral gegenüberliegende Ausnehmungen 9 und 10 auf, in denen sich jeweils ein Magnet 11 bzw. 12 befindet, dessen dem Luftspalt 6 jeweils zugewandte Fläche mit der an die jeweilige Ausnehmung 9 bzw. 10 angrenzenden Wandfläche des Stators 7 fluchtet. Die Magnete 11, 12 sind mithin, wie am besten aus Fig. 1 erkennbar ist, bündig mit der Innenfläche des äußeren Stators 7 und mittig zum inneren Stator 8 angeordnet. Die Magnetfelder der Magnete 11, 12 sind entgegengesetzt zueinander ausgerichtet, d.h. wenn beim Magneten 11 beispielsweise der Südpol zum inneren Stator 8 zeigt, so ist beim Magneten 12 der Nordpol zum inneren Stator 8 gerichtet. Aufgrund der vorstehenden Anordnung bilden die beiden Magnete 11, 12 einen in Fig. 2 durch die gestrichelte Linie 13 angedeuteten geschlossenen Kreis, in dem, beginnend beim Magneten 11, das Magnetfeld den Steg 5 durchsetzt und beidseits einer Nut 14 hälftig in den inneren Stator 8 eindringt, um anschließend beidseits einer Nut 15 nach erneutem Durchsetzen des Stegs 5 zum Magneten 12 zu gelangen, wobei sich der Magnetkreis vom Magneten 12 zum Magneten 11 über den äußeren Stator 7 schließt.

Während der innere Stator 8 bei der Ausführungsform gemäß den Figuren 1 und 2 mit zwei Magneten 11, 12 und zwei Sensorspulen 16, 17 ausgestattet ist, zeigt die Figur 4 eine Variante mit drei um jeweils 60° zueinander versetzten Magnetpaaren 11, 12 bzw. 18, 19 und 20, 21 sowie drei Sensorspulenpaaren 22, 23 bzw. 24, 25 und 26, 27. Eine derartige Erhöhung der Magnet- und Sensorspulenpaare bietet Vorteile, wobei es wichtig ist, daß die Richtung des Magnetfelds der aufeinanderfolgenden Magnete sich abwechselt, d.h. auf den Magneten 11 mit zum Steg 5 weisenden Südpol ein Magnet 18 mit zum Steg 5 weisenden Nordpol usw. folgt. Die bezüglich der Magnetfeldrichtung wechselnde Reihenfolge der Magnete 11, 18, 20, 12, 19, 21 ist für das Minimieren der Anzahl der Sensorspulen 22 bis 27 von maßgeblicher Bedeutung. Wenn sich nämlich der Steg 5 dreht, so induzieren die Magnete 11, 12 bzw. 18, 19 bzw. 20, 21 in dem von ihrem Magnetfeld durchfluteten Teil des Stegs 5 Spannungen, die Wirbelströme im Steg 5 zur Folge haben, wie sie in der die Magnete 21, 11 und 18 sowie die Sensorspulen 27, 22, 23 und 24 zeigenden Abwicklung durch die gestrichelten Linien 28 bis 33 angedeutet sind, Fig. 5.

Aufgrund einer vorgegebenen Drehrichtung des Stegs 5 mögen die Wirbelströme 28 bis 33 die jeweils durch Pfeile 34 angedeutete Richtung haben. Infolge der abwechselnden Magnetisierungsrichtung (...S-N-S...) der Magnete 11, 18, 20, 12, 19, 21 erzeugen jeweils zwei benachbarte Magnete 21, 11 bzw. 11, 18 zwischen ihnen Wirbelströme 29, 30 bzw. 31, 32, deren durch einen Punkt 35 als Pfeilspitze und ein Kreuz 36 als Pfeilende angedeuteten Magnetfelder die gleiche Richtung haben. Die jeweils benachbarten Wirbelströme 29, 30 bzw. 31, 32 verbinden sich zu jeweils einem Wirbelstromring 37 bzw. 38. Der eingezeichneten Orientierung der Magnetfelder tragen die Sensorspulen 22 bis 27 Rechnung, indem sie jeweils von der Nut 14 bis zur Nut 39, von der Nut 39 bis zur Nut 40, von der Nut 40 bis zur Nut 15, von der Nut 15 bis zur Nut 41, von der Nut 41 bis zur Nut 42 und von der Nut 42 bis zur Nut 14 reichen.

Die Spulen 22 bis 27 umfassen - wie in Fig. 5 am Beispiel der Spulen 22 und 23 gezeigt - jeweils vollständig ein magnetisches Feld. Aus der Fig. 5 geht außerdem hervor, daß der Wikkelsinn der jeweils benachbarten Sensorspulen entgegengesetzt ist, so daß sich bei Reihenschaltung der Sensorspulen die induzierten Spannungen addieren.

Die beschriebene Anordnung hat im übrigen den Vorteil, daß sich Fremdfelder unabhängig davon, aus welcher Richtung sie auf die Vorrichtung treffen, in den Sensorspulen kompensieren, und dies ganz abgesehen davon, daß der äußere Stator 7, die Nabe 4 und eine Abdeckung 43, die sämtlich aus ferromagnetischem Material bestehen, eine Abschirmung gegenüber Fremdfeldern darstellen.

Die Abdeckung 43 besitzt einen eine Hohlwelle 44 bildenden Bund, der zur Halterung des inneren Stators 8 und einer Verstärker-Platine 45 dient, die über bei 46 angedeutete Leitungen mit den Sensorspulen und über ein Anschlußkabel 47 mit einer Regeleinrichtung verbunden ist.

## Patentansprüche

1. Vorrichtung mit von Spulen (16, 17) gebildeten Sensoren zur Erzeugung drehzahlabhängiger Signale unter Ausnutzung des Wirbelstromeffekts mit einem mit der Welle (2) eines hinsichtlich seines Drehzahlverhaltens zu überwachenden Aggregats verbindbaren topfförmigen Rotor, dessen sich in axialer Richtung erstreckender umlaufender Steg (5) im Luftspalt (6) eines Magnetfelds rotiert und bei der der Luftspalt (6) von einem ringförmigen äußeren Stator (7) und einem inneren Stator (8) begrenzt wird, wobei einer der beiden Statoren (7, 8) an mindestens zwei sich diametral gegenüberliegenden Stellen mit dem Luftspalt (6) zugewandten Magneten (11, 12) versehen ist, und wobei den Magneten (11, 12) eine der Zahl der Magnete (11, 12) entsprechende Zahl von paarweise angeordneten Spulen (16, 17) zugeordnet ist, **dadurch gekennzeichnet, dass** jedem der Magnete (11, 12) am anderen der beiden Statoren (7, 8) je eine axiale Aufnahmenut (14, 15) für jeweils zwei Sensorspulen (16, 17) gegenüberliegt und jede der Sensorspulen (16, 17) so zwischen jeweils zwei in Umfangsrichtung benachbarten axialen Aufnahmenuten (14, 15) gewickelt ist, dass ihre Wicklungen den jeweils zwischen den beiden Aufnahmenuten (14, 15) liegenden Umfangsabschnitt des mit den Aufnahmenuten (14, 15) versehenen Stators vollständig umschließen.

2. Vorrichtung nach Anspruch 1, **dadurch gekennzeichnet, dass** die Magnete (11, 12) am äußeren Stator (7) und die Sensorspulen (16, 17) am inneren Stator (8) angeordnet sind.

3. Vorrichtung nach Anspruch 1 oder 2, **dadurch gekennzeichnet, dass** über den Umfang der Statoren (7, 8) mindestens jeweils zwei Paare von Magneten (11, 12; 18, 19; 20, 21) und Sensorspulen (22, 23; 24, 25; 26, 27) verteilt sind.

4. Vorrichtung nach einem der Ansprüche 1 bis 3, **dadurch gekennzeichnet, dass** die Magnete (11, 12) in Ausnehmungen (9, 10) des sie tragenden Stators (7) angeordnet sind.

5. Vorrichtung nach Anspruch 4, **dadurch gekennzeichnet, dass** die dem Luftspalt (6) zugewandten Flächen der Magnete (11, 12; 18, 19; 20, 21) mit der dem Luftspalt (6) zugewandten Umfangsfläche des Stators (7) fluchten.

6. Vorrichtung nach einem der Ansprüche 1 bis 5, **dadurch gekennzeichnet, dass** der Rotor (4, 5) eine aus ferromagnetischem Material bestehende Nabe (4) und einen von dieser gehaltenen ringförmigen Steg (5) aus einem elektrisch leitenden, nicht magnetisierbaren Material aufweist.

7. Vorrichtung nach einem der Ansprüche 1 bis 6, **dadurch gekennzeichnet, dass** der äußere Stator (7) und der innere Stator (8) über eine Abdeckung (43) miteinander verbunden sind.

8. Vorrichtung nach Anspruch 7, **dadurch gekennzeichnet, dass** die Abdeckung (43) aus ferromagnetischem Material besteht.

9. Vorrichtung nach Anspruch 7 oder 8, **dadurch gekennzeichnet, dass** die Abdeckung (43) eine Halterung für den inneren Stator (8) bildet.

10. Vorrichtung nach einem der Ansprüche 7 bis 9, **dadurch gekennzeichnet, dass** die Abdeckung (43) an ihrer dem inneren Stator (8) zugewandten Seite eine mit den Sensorspulen (16, 17) und einem Anschlusskabel (47) verbundene elektronische Verstärker-Platine (46) trägt.

11. Vorrichtung nach einem der Ansprüche 7 bis 10, **dadurch gekennzeichnet, dass** der den inneren Stator (8) tragende Teil der Abdeckung (43) als Hohlwelle (44) ausgebildet ist.

12. Vorrichtung nach einem der Ansprüche 1 bis 11, **dadurch gekennzeichnet, dass** der Steg (5) des Rotors (4, 5) einen den inneren Stator (8) und die auf diesen gewickelten Sensorspulen (16, 17 bzw. 22, 23; 24, 25; 26, 27) umschließenden Käfig bildet.

13. Vorrichtung nach einem der Ansprüche 1 bis 12, **dadurch gekennzeichnet, dass** die Nuten (14, 15) an ihren den Magneten (11, 12) zugewandten Seiten einen schmalen Schlitz bilden, der von lippenförmigen Vorsprüngen des die Sensorspulen (16, 17) aufnehmenden Stators (8) begrenzt wird.

14. Vorrichtung nach einem der Ansprüche 1 bis 13, **dadurch gekennzeichnet, dass** über den Umfang der Statoren (7, 8) jeweils drei Paare von Magneten (11, 12; 18, 19; 20, 21) und Sensorspulen (22, 23; 24, 25; 26, 27) verteilt sind.

## Claims

1. Apparatus having sensors which are formed by coils (16, 17) for production of speed-dependent signals using the eddy current effects with a pot-shaped rotor which can be connected to the shaft (2) of a set whose speed response is to be monitored, with the rotor, with the circumferential web (5) of this rotor, which extends in the axial direction, rotating in the air gap (6) of a magnetic field, and in which the air gap (6) is bounded by an annular outer stator (7) and an inner stator (8) with one of the two stators (7, 8) being provided at at least two diametrically opposite points with magnets (11, 12) which face the air gap (6), and with the magnets (11, 12) having a number of associated coils (16, 17) which are arranged in pairs, and with the number of coils (16, 17) corresponding to the number of magnets (11, 12), **characterized in that** in each case one axial holding groove (14, 15) for in each case two sensor coils (16, 17) is located opposite each of the magnets (11, 12) on the other of the two stators (7, 8), and each of the sensor coils (16, 17) is wound between in each case two axial holding grooves (14, 15) which are adjacent in the circumferential direction such that their windings completely surround the respective circumferential section, which is located between the two holding grooves (14, 15), of the stator which is provided with the holding grooves (14, 15).

2. Apparatus according to Claim 1, **characterized in that** the magnets (11, 12) are arranged on the outer stator (7), and the sensor coils (16, 17) are arranged on the inner stator (3).

3. Apparatus according to Claim 1 or 2, **characterized in that** at least two pairs of magnets (11, 12; 18, 19; 20, 21) and sensor coils (22, 23; 24, 25; 26, 27) are in each case distributed over the circumference of the respective stators (7, 8).

4. Apparatus according to one of Claims 1 to 3, **characterized in that** the magnets (11, 12) are arranged in recesses (9, 10) in the stator (7) to which they are fitted.

5. Apparatus according to Claim 4, **characterized in that** those surfaces of the magnets (11, 12; 18, 19; 20, 21) which face the air gap (6) are aligned with the circumferential surface of the stator (7) which faces the air gap (6).

6. Apparatus according to one of Claims 1 to 5, **characterized in that** the rotor (4, 5) has a hub (4) composed of ferromagnetic material and an annular web (5) which is held by this hub (4) and is composed of an electrically conductive non-magnetic material.

7. Apparatus according to one of Claims 1 to 6, **characterized in that** the outer stator (7) and the inner stator (8) are connected to one another via a cover (43).

8. Apparatus according to Claim 7, **characterized in that** the cover (43) is composed of ferromagnetic material.

9. Apparatus according to Claim 7 or 8, **characterized in that** the cover (43) forms a holder for the inner stator (8).

10. Apparatus according to one of Claims 7 to 9, **characterized in that** the cover (43) is fitted on its side which faces the inner stator (8) with an electronic amplifier board (46) which is connected to the sensor coils (16, 17) and to a connecting cable (47).

11. Apparatus according to one of Claims 7 to 10, **characterized in that** that part of the cover (43) to which the inner stator (8) is fitted is in the form of a hollow shaft (44).

12. Apparatus according to one of Claims 1 to 11, **characterized in that** the web (5) of the rotor (4, 5) forms a cage which surrounds the inner stator (8) and the sensor coils (16, 17) and (22, 23; 24, 25; 26, 27) which are wound on it.

13. Apparatus according to one of Claims 1 to 12, **characterized in that** the grooves (14, 15) form a narrow slot on their sides which face the magnets (11, 12), which slot is bounded by projections, in the form of lips, on the stator (8) which holds the sensor coils (16, 17).

14. Apparatus according to one of Claims 1 to 13, **characterized in that** three pairs of magnets (11, 12; 18, 19; 20, 21) and sensor coils (22, 23; 24, 25; 26, 27) are distributed over the circumference of each of the stators (7, 8).

## Revendications

1. Dispositif comportant des capteurs formés par des bobines (16, 17) pour la production de signaux dépendant de la vitesse de rotation, moyennant l'utilisation de l'effet des courants de Foucault, comportant un rotor en forme de pot, qui peut être relié à l'arbre (2) d'un agrégat, dont le comportement de la vitesse de rotation doit être contrôlé et dont la barrette périphérique (5), qui s'étend dans la direction axiale, tourne dans l'entrefer (6) d'un champ magnétique, et dans lequel l'entrefer (6) est limité par un stator extérieur de forme annulaire (7) et par un stator intérieur (8), et dans lequel l'un des deux stators (7, 8) est équipé, en au moins deux emplacements diamétralement opposés, d'aimants (11, 12) tournés vers l'entrefer (6), et dans lequel un nombre de bobines associées par paires (16, 17), qui correspond au nombre des aimants (11, 12), sont associées aux aimants (11, 12), **caractérisé en ce que** respectivement une rainure de réception axiale (14, 15) pour respectivement deux bobines (16, 17) de capteurs, est située en vis-à-vis de chacun des aimants (11, 12) de l'autre des deux stators (7, 8) et que chacune des bobines (16, 17) de capteurs est enroulée entre respectivement deux rainures axiales de logement (14, 15), qui sont voisines dans la direction circonférentielle, de telle sorte que leurs enroulements entourent complètement la section périphérique, située respectivement entre les deux rainures (14, 15), du stator équipé des rainures de réception (14, 15).

2. Dispositif selon la revendication 1, **caractérisé en ce que** les aimants (11, 12) sont disposés sur le stator extérieur (7) et les bobines (16, 17) des capteurs sont disposées sur le stator intérieur (8).

3. Dispositif selon la revendication 1 ou 2, **caractérisé en ce qu'**au moins respectivement deux paires d'aimants (11, 12; 18, 19; 20, 21) et de bobines (22, 23; 24, 25; 26, 27) de capteurs sont réparties sur la périphérie des stators (7, 8).

4. Dispositif selon l'une des revendications 1 à 3, **caractérisé en ce que** les aimants (11, 12) sont disposés dans des évidements (9, 10) du stator (7) qui les porte.

5. Dispositif selon la revendication 4, **caractérisé en ce que** les surfaces des aimants (11, 12; 18, 19; 20, 21), qui sont tournées vers l'entrefer (6), sont alignées avec la surface périphérique du stator (7) tournée vers l'entrefer (6).

6. Dispositif selon l'une des revendications 1 à 5, **caractérisé en ce que** le rotor (4, 5) comporte un moyeu (4) formé d'un matériau ferromagnétique et une barrette de forme annulaire (5) retenue par ce moyeu et formée par un matériau électriquement conducteur non aimantable.

7. Dispositif selon l'une des revendications 1 à 6, **caractérisé en ce que** le stator extérieur (7) et le stator intérieur (8) sont reliés entre eux au moyen d'un revêtement (43).

8. Dispositif selon la revendication 7, **caractérisé en ce que** le capot (43) est formé d'un matériau ferromagnétique.

9. Dispositif selon la revendication 7 ou 8, **caractérisé en ce que** le capot (43) forme un dispositif de retenue pour le stator intérieur (8).

10. Dispositif selon l'une des revendications 7 à 9, **caractérisé en ce que** le capot (43) porte, sur son côté tourné vers le stator intérieur (8), une platine d'amplificateur électronique (46), qui est reliée aux bobines (16, 17) de capteurs et à un câble de raccordement (47).

11. Dispositif selon l'une des revendications 7 à 10, **caractérisé en ce que** la partie, qui porte le stator intérieur (8), du capot (43) est agencée sous la forme d'un arbre creux.

12. Dispositif selon l'une des revendications 1 à 11, **caractérisé en ce que** la barrette (5) du rotor (4, 5) forme une cage qui entoure le stator intérieur (8) et les bobines (16, 17 ou 22, 23; 24, 25; 26, 27) de capteurs, enroulées sur ce stator.

13. Dispositif selon l'une des revendications 1 à 12, **caractérisé en ce que** les rainures (14, 15) forment, sur leurs côtés tournés vers les aimants (11, 12), une fente étroite, qui est limitée par des parties saillantes en forme de lèvres du stator (8) qui loge les bobines (16, 17) des capteurs.

14. Dispositif selon l'une des revendications 1 à 13, **caractérisé en ce que** respectivement trois paires d'aimants (11, 12; 18, 19; 20, 21) et de bobines (22, 23; 24, 25; 26, 27) de capteurs sont réparties sur la périphérie des stators (7, 8).
